# EUROPEAN PATENT APPLICATION

(11) **EP 4 789 843 A1**
(43) Date of publication of application: **12.08.2026**
(21) Application number: 25867205.4
(22) Date of filing: 22.10.2025
(51) Int. Cl.: B29C 51/08, B29C 51/30, B29C 51/26, B29C 51/46, B29C 43/36, B29D 99/00, H01M 50/105, B29L 31/00

(54) **BATTERY CASE MOLDING DEVICE AND BATTERY CASE MOLDING METHOD USING SAME**

(30) Priority: 17.12.2024 KR 20240188979; 16.04.2025 KR 20250049517
(71) Applicant: LG Energy Solution, Ltd., Seoul 07335 (KR)
(72) Inventor: BAEK, Jeong Gyu, Daejeon 34122 (KR); KIM, Ki Su, Daejeon 34122 (KR); OH, Jung Su, Daejeon 34122 (KR); HWANG, Seung Jin, Daejeon 34122 (KR)
(74) Representative: Goddar, Heinz J.
(86) International application number: PCT/KR2025/016808
(87) International publication number: WO 2026/134607

(57) **Abstract**

Disclosed are a battery case shaping apparatus including a punch configured to shape a battery case, a die plate unit having a shaping hole configured to allow a part of the punch to be inserted thereinto, and an angle adjustment unit configured to adjust an inclination angle of the die plate unit, and a battery case shaping method using the same.

## Description

### [Technical Field]

This application claims the benefit of priority to Korean Patent Application No. 10-2024-0188979 filed on December 17, 2024 and Korean Patent Application No. 10-2025-0049517 filed on April 16, 2025, the disclosure of which is incorporated herein by reference in its entirety.

The present invention relates to a battery case shaping apparatus and a battery case shaping method using the same, and more particularly to a battery case shaping apparatus capable of preventing wrinkles from being formed around a cup portion of a pouch-shaped battery case when shaping the cup portion and a battery case shaping method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A pouch-shaped secondary battery is manufactured by shaping a laminate sheet including an outer covering layer, a metal barrier layer, and an inner adhesive layer to form a battery case with a receiving portion formed therein, receiving an electrode assembly and an electrolyte in the receiving portion, and sealing the perimeter of the receiving portion.

Meanwhile, a shaping process of forming an electrode assembly receiving portion in a pouch-shaped battery case uses a method of disposing a laminate sheet on a die and pressing the laminate sheet through a punch in the state in which the laminate sheet is fixed by a stripper.

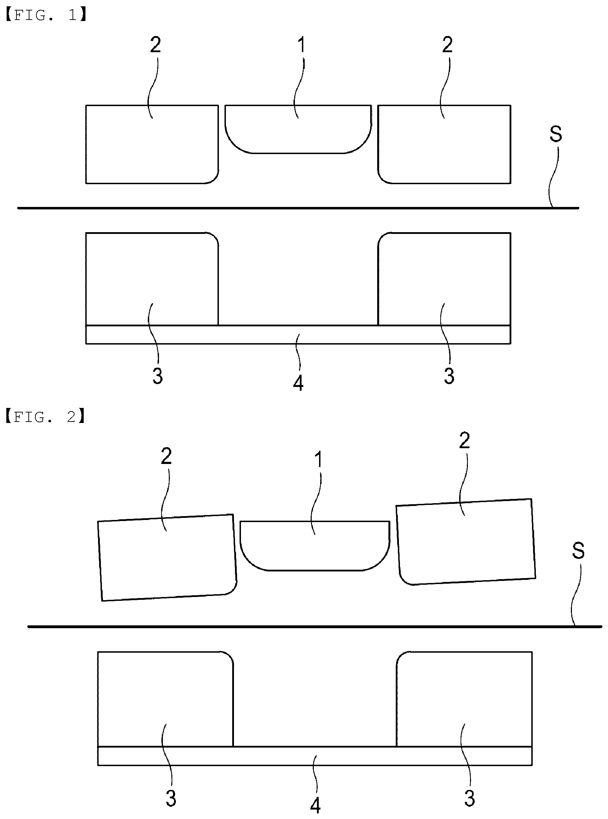

FIG. 1 is a conceptual view of a conventional battery case shaping apparatus, and FIG. 2 is a conceptual view illustrating the misaligned state of a stripper constituting the conventional battery case shaping apparatus.

Referring to FIGs. 1 and 2, the conventional pouch-shaped battery case shaping apparatus includes a die 3 configured to support a laminate sheet S, a lower plate 4 configured to support the die 3, a stripper 2 located above the die 3 to fix the laminate sheet S, and a punch 1 configured to press the laminate sheet S to form a cup portion.

After the laminate sheet S is disposed between the die 3 and the stripper 2, the laminate sheet S is pressed and fixed by the die 3 and the stripper 2. In this state, a part of the laminate sheet S may be pressed by the punch 1 to form the cup portion in the laminate sheet S.

At this time, if the angle of the stripper 2 is misaligned, as shown in FIG. 2, the die 3 and the stripper 2 are not parallel to each other, causing uneven pressure on the surface of the laminate sheet S pressed by the stripper 2, and during shaping, the region around the cup portion of the laminate sheet S may be drawn in, causing defects in the outer surface of the laminate sheet S, such as wrinkles or cracks.

### (Prior Art Document)

(Patent Document 1) Korean Registered Patent Publication No. 10-2176631

### [Disclosure]

### [Technical Problem]

The present invention has been made in view of the above problems, and it is an object of the present invention to provide a battery case shaping apparatus configured such that, when forming a cup portion by shaping a laminate sheet, a stripper applies uniform pressure to a pressed surface of the laminate sheet to minimize the occurrence of wrinkles around the cup portion, and a battery case shaping method using the same.

### [Technical Solution]

As a technical means for achieving the above object, a battery case shaping apparatus according to an embodiment of the present invention includes a punch (100) configured to shape a battery case, a die plate unit (200) having a shaping hole (211) configured to allow a part of the punch to be inserted thereinto, and an angle adjustment unit (300) configured to adjust the inclination angle of the die plate unit (200).

Also, in the battery case shaping apparatus according to the embodiment of the present invention, the angle adjustment unit (300) may include a plurality of cylinder units (310), and the plurality of cylinder units (310) may be individually driven.

Also, in the battery case shaping apparatus according to the embodiment of the present invention, the cylinder unit (310) may have a spherical upper surface.

Also, in the battery case shaping apparatus according to the embodiment of the present invention, the angle adjustment unit (300) may further include a support member (320) configured to support the plurality of cylinder units (310), and the support member (320) may be provided with a plurality of receiving holes (321) formed such that the plurality of cylinder units (310) protrudes upward therethrough.

Also, in the battery case shaping apparatus according to the embodiment of the present invention, the die plate unit (200) may include a first die plate (210) having the shaping hole (211) formed therein, a second die plate (220) located under the first die plate (210), the second die plate being configured to support the first die plate (210), and a die holder (230) located under the second die plate (220), the die holder being configured to fix the first die plate (210) and the second die plate (220).

Also, in the battery case shaping apparatus according to the embodiment of the present invention, the angle adjustment unit (300) may be located under the die plate unit (200), and the plurality of cylinder units (310) may be in contact with a lower surface of the die holder (230) and may adjust the angle of the die holder (230) through individual driving.

Also, in the battery case shaping apparatus according to the embodiment of the present invention, the punch (100) may include a punch plate (110) and a punch member (120) protruding downward from the punch plate (110), the punch member being configured to be inserted into the shaping hole (211).

Also, the battery case shaping apparatus according to the embodiment of the present invention may further include a stripper (400) configured to press an outer periphery of the laminate sheet (S) disposed on the die plate unit (200).

Also, in the battery case shaping apparatus according to the embodiment of the present invention, the stripper (400) may include a first stripper (410) configured to press the outer periphery of the laminate sheet (S), the first stripper having a first through-hole (411) configured to allow the punch member (120) to pass therethrough, and a second stripper (420) located above the first stripper (410), the second stripper being provided with a second through-hole (421) having a position and a size corresponding to the first through-hole (411).

Also, in the battery case shaping apparatus according to the embodiment of the present invention, the shaping hole (211), the first through-hole (411), and the second through-hole (421) may have mutually corresponding positions and sizes.

Also, the battery case shaping apparatus according to the embodiment of the present invention may further include a first driving unit (500) connected to an upper side of the punch (100) so as to provide upward and downward driving force to the punch (100) or connected to an upper side of the stripper (400) so as to provide upward and downward driving force to the stripper (400).

Also, the battery case shaping apparatus according to the embodiment of the present invention may further include a second driving unit (600) located under the angle adjustment unit (300), the second driving unit being configured to provide upward and downward driving force to the die plate unit (200).

Also, the battery case shaping apparatus according to the embodiment of the present invention may further include a support plate (700) including a first support plate (710) configured to support the punch (100) and a second support plate (720) configured to support the angle adjustment unit (300) and a connection member (800) configured to connect the first support plate (710) and the second support plate (720) to each other.

Also, in the battery case shaping apparatus according to the embodiment of the present invention, the second support plate (720) may be provided with a third through-hole (7210) configured to allow the angle adjustment unit (300) to pass therethrough.

In addition, a battery case shaping method using the battery case shaping apparatus according to the embodiment of the present invention includes (S1) locating a laminate sheet (S) between the punch (100) and the die plate unit (200) and (S2) driving the punch (100) or the die plate unit (200) to shape the laminate sheet (S), wherein, prior to step (S2), the inclination angle of the die plate unit (200) is adjusted by the angle adjustment unit (300).

### [Advantageous Effects]

As is apparent from the above description, in a battery case shaping apparatus according to the present invention and a battery case shaping method using the same, an angle adjustment unit configured to adjust the horizontal angle of a die plate may be provided under the die plate, and the angle adjustment unit may adjust the horizontal angle of the die plate in the state in which the horizontal angle of a stripper is misaligned such that the stripper and the die plate are parallel to each other.

In addition, in the battery case shaping apparatus according to the present invention and the battery case shaping method using the same, the angle adjustment unit may adjust the horizontal angle of the die plate so as to be equal to the horizontal angle of the stripper such that uniform pressure is distributed on the surface of the laminate sheet pressed by the stripper, whereby it is possible to prevent the occurrence of wrinkles at a cup portion and in the vicinity of the cup portion.

Furthermore, in the battery case shaping apparatus according to the present invention and the battery case shaping method using the same, the punch may be moved upward so as to be removed from the cup portion in the state in which pressing of the stripper is maintained after the laminate sheet is shaped, whereby it is possible to minimize the occurrence of wrinkles around the cup portion of the laminate sheet.

### [Description of Drawings]

FIG. 1 is a conceptual view of a conventional battery case shaping apparatus.
FIG. 2 is a conceptual view illustrating the misaligned state of a stripper constituting the conventional battery case shaping apparatus.
FIG. 3 is a perspective view illustrating a battery case shaping apparatus according to the present invention.
FIG. 4 is a front view illustrating the battery case shaping apparatus according to the present invention.
FIG. 5 is an exploded perspective view illustrating a punch, a die plate unit, an angle adjustment unit, and a stripper constituting the battery case shaping apparatus according to the present invention.
FIG. 6 is a front view illustrating the die plate unit and the angle adjustment unit constituting the battery case shaping apparatus according to the present invention.
FIG. 7 is a view illustrating the misaligned state of the stripper constituting the battery case shaping apparatus according to the present invention.
FIG. 8 is a view illustrating that the angle adjustment unit constituting the battery case shaping apparatus according to the present invention adjusts the inclination angle of a die plate.
FIG. 9 is a flowchart illustrating a shaping method using the battery case shaping apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a battery case shaping apparatus according to the present invention and a battery case shaping method using the same will be described.

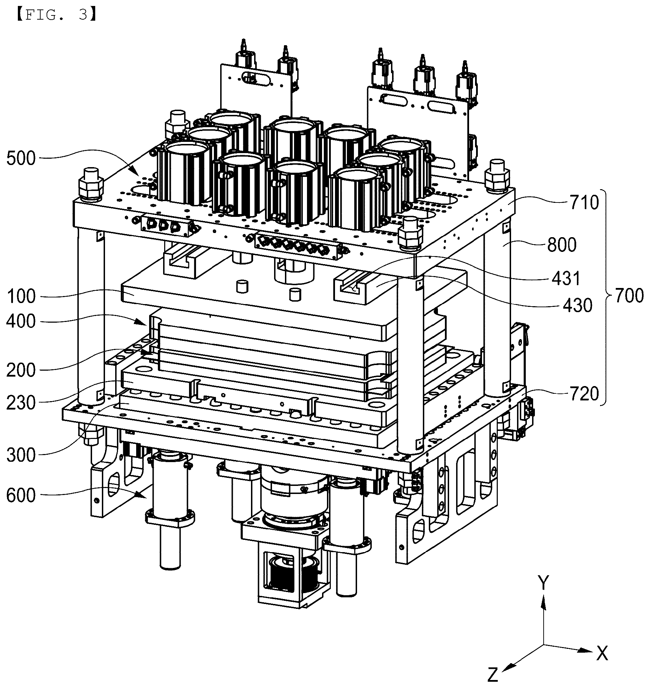

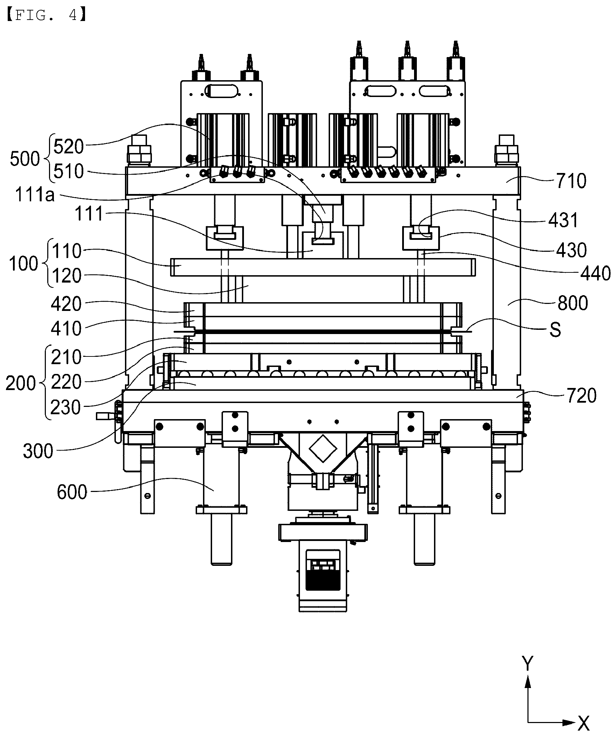

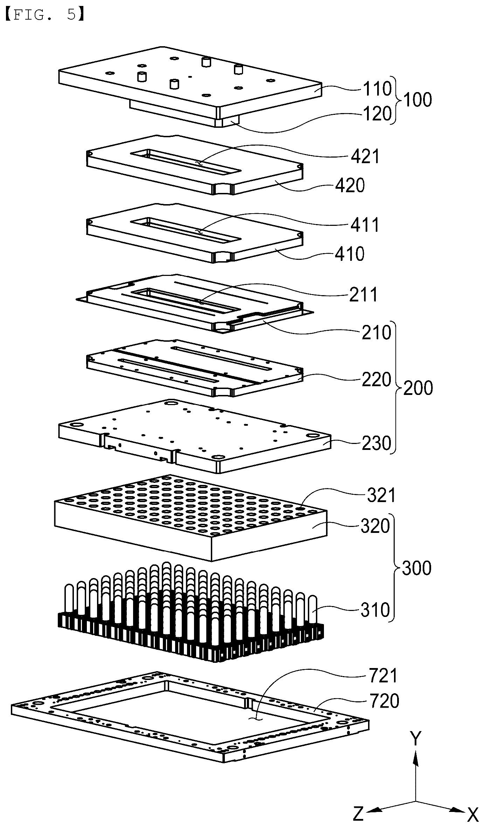

FIG. 3 is a perspective view illustrating a battery case shaping apparatus according to the present invention, FIG. 4 is a front view illustrating the battery case shaping apparatus according to the present invention, and FIG. 5 is an exploded perspective view illustrating a punch, a die plate unit, an angle adjustment unit, and a stripper constituting the battery case shaping apparatus according to the present invention.

Referring to FIGs. 3 to 5, the battery case shaping apparatus according to the present invention is an apparatus for shaping a battery case configured to receive an electrode assembly by pressing a part of a laminate sheet S, and includes a punch 100, a die plate unit 200, an angle adjustment unit 300, a stripper 400, a first driving unit 500, a second driving unit 600, a support plate 700, and a connection member 800.

First, generally, the laminate sheet S may include an outer covering layer, a metal layer, and an inner covering layer.

For example, the inner covering layer is disposed in direct contact with the electrode assembly, and therefore the inner covering layer must exhibit high insulation properties and high resistance to an electrolytic solution. In addition, the inner covering layer must exhibit high sealability in order to hermetically seal the case from the outside, i.e. a thermally-bonded sealed portion between inner layers must exhibit excellent thermal bonding strength.

The inner covering layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which is disposed so as to abut the inner covering layer, corresponds to a barrier layer configured to prevent moisture or various kinds of gas from permeating into the battery from the outside. An aluminum thin film, which is lightweight and easily shapeable, may be used as a preferred material for the metal layer.

The outer covering layer is provided on the other surface of the metal layer. The outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

The punch 100 may be configured to shape the battery case by pressing a part of the laminate sheet S. The punch 100 includes a punch plate 110 and a punch member 120, and may be provided above the laminate sheet S so as to shape the battery case. The punch plate 110 may support the punch member 120 such that the punch member 120 presses a part of the laminate sheet S.

The punch plate 110 may be provided thereon (12 o'clock position in FIG. 4) with a first guide member 111, to which the first driving unit 500 is connected. The first guide member 111 is provided on an upper surface of the punch plate 110, and a first guide recess 111a may be formed in the upper surface of the first guide member 111 so as to be depressed downward.

In this case, one or more first driving units 500 are connected to the first guide recess 111a, allowing the punch 100 to be stably connected to and supported by the first driving units 500.

The punch member 120 is formed so as to protrude downward from the punch plate 110, and may be formed so as to be inserted into a shaping hole 211 formed in the die plate unit 200.

For example, the punch member 120 may be configured such that, when inserted into the shaping hole 211 in the state in which the laminate sheet S is seated on the die plate unit 200, a cup portion corresponding to the shaping hole 211 is formed in the laminate sheet S.

Corners of the punch member 120 at which a lower surface and side surfaces of the punch member are joined to each other may each have a predetermined radius of curvature so as to prevent damage to the laminate sheet S when the laminate sheet S is pressed.

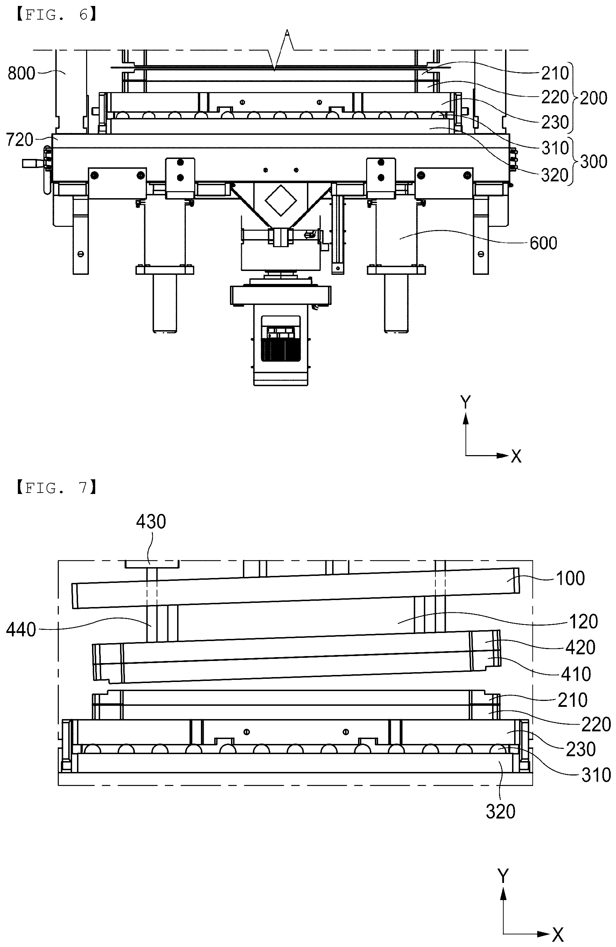

FIG. 6 is a front view illustrating the die plate unit and the angle adjustment unit constituting the battery case shaping apparatus according to the present invention.

Referring to FIGs. 3 to 6, the die plate unit 200 may be disposed under the punch 100 such that the laminate sheet S is seated thereon. The die plate unit 200 may include a first die plate 210, a second die plate 220, and a die holder 230.

The first die plate 210 may be disposed under the punch 100 such that the laminate sheet S is seated thereon. In this case, the first die plate 210 may be provided with a shaping hole 211 configured to allow the insertion of a part of the punch 100. A part of the punch member 120 is inserted into the shaping hole 211, and the punch member 120 may press the laminate sheet S seated on the first die plate 210 to form the cup portion in the laminate sheet S.

The shaping hole 211 formed in the first die plate 210 may have a size greater than the size of the punch member 120 such that the punch member 120 can be inserted into the shaping hole. The shaping hole 211 may be formed with a size corresponding to each of a first through-hole 411 and a second through-hole 421 formed in the stripper 400, a description of which will follow.

In addition, the second die plate 220 may be disposed under the first die plate 210 to support the first die plate 210. The second die plate 220 may support the first die plate 210 while a recess or a hole is not formed therein; however, the present invention is not limited thereto. For example, the second die plate 220 may be provided with a forming recess (not shown) or a shaping hole (not shown) formed at a position corresponding to the shaping hole 211 such that a part of the punch member 120 is inserted thereinto.

The die holder 230 is located under the second die plate 220, and may fix and support the first die plate 210 and the second die plate 220.

The angle adjustment unit 300, which is configured to adjust the inclination angle of the die plate unit 200, may be disposed under the die holder 230.

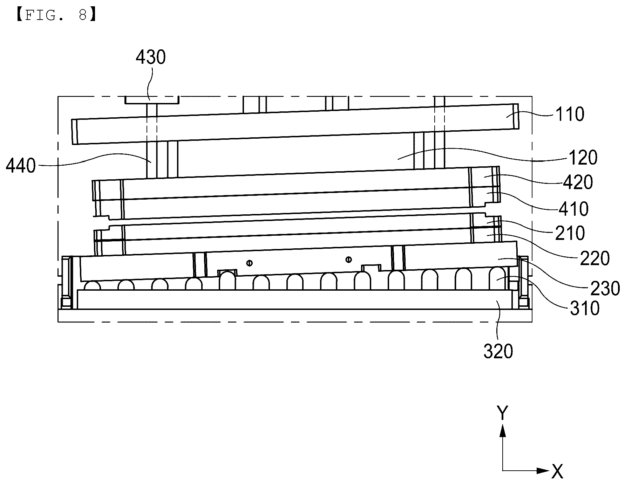

FIG. 7 is a view illustrating the misaligned state of the stripper constituting the battery case shaping apparatus according to the present invention, and FIG. 8 is a view illustrating that the angle adjustment unit constituting the battery case shaping apparatus according to the present invention adjusts the inclination angle of the die plate.

Referring to FIGs. 3 to 8, the angle adjustment unit 300 includes a plurality of individually driven cylinder units 310, and the inclination angle of the die plate unit 200 may be adjusted by adjusting the height of each of the plurality of cylinder units 310. In this case, the angle adjustment unit 300 may adjust the inclination angle of the die plate unit 200 relative to a horizontal plane (x-z plane in FIG. 3).

In other words, the plurality of cylinder units 310 is in contact with a lower surface of the die holder 230 and is individually driven to adjust the angle of the die holder 230, whereby the angle of each of the first die plate 210 and the second die plate 220 fixed to and supported by the die holder 230 may be adjusted.

In this case, an upper surface (12 o'clock position in FIG. 4) of each of the plurality of cylinder units 310 in contact with the die holder 230 may be configured as a sphere. Accordingly, the spherical upper surface of each of the plurality of cylinder units 310 is in point-contact with the die holder 230, enabling easier adjustment of the inclination angle of the die plate unit 200.

The plurality of cylinder units 310 may be controlled by a controller (not shown), and the controller (not shown) may control driving of the plurality of cylinder units 310, the first driving unit 500, and the second driving unit 600.

In addition, the angle adjustment unit 300 includes a support member 320 configured to support the plurality of cylinder units 310, and the support member 320 may be provided with a plurality of receiving holes 321 formed such that a part of each of the plurality of cylinder units 310 protrudes upward therethrough. For example, each of the receiving holes 321 may be formed to allow insertion of a rod (not shown) that protrudes from a body portion (not shown) of a corresponding one of the cylinder units 310 and is driven so as to move forward and backward. In this case, the body portion (not shown) of the cylinder unit 310 may be received in the support member 320, and the rod (not shown) may protrude upward from the support member 320 through the receiving hole 321.

In addition, the angle adjustment unit 300 may additionally include a sensor unit (not shown) configured to measure the inclination angle of the stripper 400, and may measure the x-axis angle and z-axis angle of the stripper 400 through the sensor unit (not shown). The sensor unit (not shown) may transmit the measured angle of the stripper 400 to the controller (not shown), and the controller (not shown) may individually control the driving of the plurality of cylinder units 310 to adjust the inclination angle of the die plate unit 200 such that the die plate unit 200 is parallel to the stripper 400.

The stripper 400 includes a first stripper 410 and a second stripper 420, and may be configured to fix the outer periphery of the laminate sheet S seated on the die plate unit 200. The stripper 400 may be provided so as to surround the outer periphery of the punch member 120.

The first stripper 410 may be located above the die plate unit 200, and may be configured to press and fix the outer periphery of the laminate sheet S placed on the die plate unit 200.

A first through-hole 411 is formed in the first stripper 410, and the first through-hole 411 may be formed with a size greater than the size of the punch member 120 such that the punch member 120 can pass through the first through-hole. In this case, the first through-hole 411 may have a size corresponding to the shaping hole 211 formed in the first die plate 210.

In addition, a second through-hole 421 having a position and size corresponding to the first through-hole 411 may be formed in the second stripper 420 located above the first stripper 410. The second through-hole 421 may be formed with a size greater than the size of the punch member 120 such that the punch member 120 can pass through the second through-hole so as to correspond to the first through-hole 411, and may have a size corresponding to the shaping hole 211 formed in the first die plate 210.

That is, each of the first through-hole 411 and the second through-hole 421 may be formed with a size corresponding to the shaping hole 211, and the first through-hole 411, the second through-hole 421, and the shaping hole 211 may be formed in the respective plates so as to have mutually corresponding positions and sizes.

In addition, the second stripper 420 may be connected to an upper surface of the first stripper 410 so as to support the first stripper 410. In this case, the second stripper 420 may be a stripper back plate configured to support the first stripper 410. The first stripper 410 and the second stripper 420 may be connected and fixed to each other via a known fastening means such as a bolt.

In addition, for example, the second stripper 420 may be connected to a guide extension member 440 extending downward from a second guide member 430 provided above the punch plate 110. The second stripper 420 may be provided separately because, if the strippers are provided integrally, it is impossible to connect the first stripper 410 and the guide extension member 440 to each other.

The second guide member 430 extends from the upper surface of the punch plate 110 in a forward-backward direction (Z-axis direction), and the second guide member 430 may be provided in an upper surface thereof with a second guide recess 431 depressed downward from the upper surface in a longitudinal direction.

In this case, the first driving unit 500 may be connected to the second guide recess 431 in the Z-axis direction, allowing the second guide member 430 and the first driving unit 500 to be connected to each other. The guide extension member 440 may extend downward from the second guide member 430 and may be connected to the second stripper 420 through the punch plate 110. As a result, the second stripper 420 may be connected to the first driving unit 500 via the second guide member 430 and the guide extension member 440, and the second stripper 420 may stably connected to the first driving unit 500 and may be driven in the upward-downward direction.

The first driving unit 500 may be connected to an upper side (12 o'clock position in FIG. 4) of the punch 100 to provide an upward and downward driving force to the punch 100, or may be connected to an upper side of the stripper 400 to provide an upward and downward driving force to the stripper 400.

The first driving unit 500 may include a 1a driving unit 510 connected to the first guide member 111 to provide upward and downward driving force to the punch 100 and a 1b driving unit 520 connected to the second guide member 430 to provide upward and downward driving force to the stripper 400.

The 1a driving unit 510 is inserted into and connected to the first guide recess 111a of the first guide member 111 to support the punch 100, and may be provided as an electric cylinder configured to provide upward and downward driving force to the punch 100.

The 1a driving unit 510 may provide downward driving force to the punch 100 such that the punch 100 presses the laminate sheet S, and may provide upward driving force to the punch 100 such that the punch 100 moves away from the laminate sheet S after the punch 100 presses the laminate sheet S.

In addition, the 1b driving unit 520 is inserted into and connected to the second guide recess 431 of the second guide member 430 to support the stripper 400, and may provide upward and downward driving force to the stripper 400. In this case, a plurality of 1b driving units 520 may be connected to one second guide member 430.

The 1b driving unit 520 may provide downward driving force to the stripper 400 such that the stripper 400 presses and fixes the outer periphery of the laminate sheet S, and the 1b driving unit 520 may continuously provide downward driving force to the stripper 400 to maintain the pressing force applied by the stripper 400 to press the outer periphery of the laminate sheet S when the punch 100 moves away from the laminate sheet S after the punch 100 presses the laminate sheet S. In addition, the 1b driving unit 520 may provide upward driving force to the stripper 400 such that the stripper 400 moves away from the laminate sheet S in the state in which the punch 100 is away from the laminate sheet S after the punch 100 presses the laminate sheet S.

Meanwhile, the second driving unit 600 is located under the angle adjustment unit 300, and may provide upward and downward driving force to the die plate unit 200. The second driving unit 600 may be connected to a lower side of the support member 320 of the angle adjustment unit 300 to provide upward and downward driving force to the support member 320. As a result, the upward and downward driving force may also be applied to the die plate unit 200 seated on or connected to the angle adjustment unit 300.

The second driving unit 600 may provide upward driving force to the die plate unit 200 such that the laminate sheet S seated on the die plate unit 200 is pressed by the die plate unit 200 and the stripper 400 and a part of the laminate sheet S is shaped by the punch 100. In addition, the second driving unit 600 may provide a downward driving force to the die plate unit 200 such that the shaped laminate sheet S is discharged from between the die plate unit 200 and the stripper 400.

The second driving unit 600 may be located under the angle adjustment unit 300 to upwardly move the die plate unit 200 having the inclination angle (horizontal angle) adjusted by the angle adjustment unit 300 toward the stripper 400.

In other words, even when the stripper 400 has a predetermined inclination angle, the second driving unit 600 may drive both the angle adjustment unit 300 and the die plate unit 200 upward in the state in which the angle adjustment unit 300 adjusts the inclination angle of the die plate unit 200 so as to correspond to the inclination angle of the stripper 400 such that the die plate unit 200 having the adjusted inclination angle is in contact with the stripper 400 and provides uniform pressure to the laminate sheet S.

Meanwhile, the support plate 700 may include a first support plate 710 configured to support the punch 100 and the stripper 400, and a second support plate 720 configured to support the die plate unit 200 and the angle adjustment unit 300.

The first driving unit 500 is seated on the first support plate 710, and a plurality of holes (not shown) may be formed such that shaft members (not shown) of the first driving units 500 protrude and extend downward therethrough.

The plurality of holes (not shown) may be formed such that body portions (not shown) of the first driving units 500 are seated on the upper surface of the first support plate 710 and the shaft members (not shown) of the first driving units 500 protrude downward therethrough. In this case, at least some of the plurality of holes may be formed as slits extending in the longitudinal direction such that the plurality of 1b driving units 520 is connected to the second guide member 430.

In addition, the second support plate 720 may be provided with a third through-hole 721 through which the angle adjustment unit 300 passes. In this case, the third through-hole 721 may be formed such that the support member 320 of the angle adjustment unit 300 is inserted thereinto. The angle adjustment unit 300 passing through the third through-hole 721 may be connected to the second support plate 720.

The connection member 800 may be configured to connect the first support plate 710 and the second support plate 720 to each other. The connection member 800 may connect the first support plate 710 and the second support plate 720 to each other while spacing edges thereof apart from each other in the vertical direction.

The first support plate 710, the second support plate 720, and the connection member 800 may fix and support the punch 100, the die plate unit 200, the angle adjustment unit 300, and the stripper 400 so as to be more stably driven through the first driving unit 500 and the second driving unit 600.

Next, a battery case shaping method using the battery case shaping apparatus having the aforementioned configurations will be described.

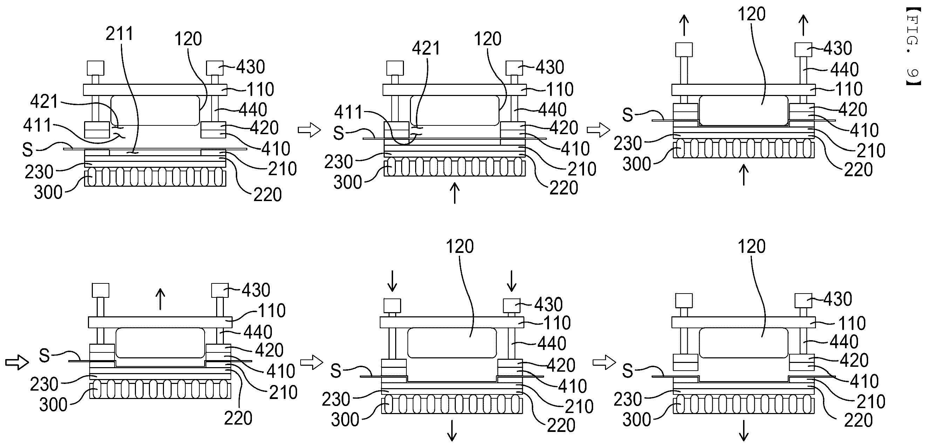

FIG. 9 is a flowchart illustrating a shaping method using the battery case shaping apparatus according to the present invention. Referring to FIGs. 3 to 9, the battery case shaping method according to the present invention may include (S1) locating a laminate sheet S between the punch 100 and the die plate unit 200 and (S2) driving the punch 100 or the die plate unit 200 to shape the laminate sheet S.

In step (S1), the laminate sheet S may be seated on the first die plate 210 and located between the first die plate 210 and the first stripper 410. In addition, prior to step (S2), the horizontal angle of the die plate unit 200 may be adjusted by the angle adjustment unit 300 so as to correspond to the inclination angle of the stripper 400.

Step (S2) will be described in more detail. The die plate unit 200 may be driven upward by the second driving unit 600, whereby the laminate sheet S may be pressed by the die plate unit 200 and the stripper 400. As the second driving unit 600 provides an additional upward driving force and simultaneously the 1b driving unit 520 provides upward driving force to the stripper 400, the laminate sheet S may be moved upward while being pressed by the die plate unit 200 and the stripper 400. As a result, the punch member 120 may be inserted into the shaping hole 211 formed in the die plate unit 200, whereby a cup portion may be formed in the upwardly moved laminate sheet S.

Subsequently, the 1a driving unit 510 may provide upward driving force to the punch 100 such that the punch 100 is separated from the laminate sheet S with the cup portion formed therein, the second driving unit 600 may provide downward driving force to the die plate unit 200 such that the laminate sheet S is moved downward, and the 1b driving unit 520 may provide downward driving force to the stripper 400 such that the laminate sheet S is move downward while being pressed by the die plate unit 200 and the stripper 400. In addition, the second driving unit 600 may further provide downward driving force to the die plate unit 200 to release the pressing force of the stripper 400 applied to the laminate sheet S and to discharge the laminate sheet S.

According to the above shaping method, the pressing force of the stripper 400 may be maintained uniform during the process of separating the punch 100 and the process of discharging the laminate sheet S after the laminate sheet S is shaped, whereby it is possible to minimize the occurrence of wrinkles around the cup portion of the laminate sheet S.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

- 100:: Punch
- 110:: Punch plate
- 111:: First guide member 111a: First guide recess
- 120:: Punch member
- 200:: Die plate unit
- 210:: First die plate 211: Shaping hole
- 220:: Second die plate
- 230:: Die holder
- 300:: Angle adjustment unit
- 310:: Cylinder unit
- 320:: Support member 321: Receiving hole
- 400:: Stripper
- 410:: First stripper 411: First through-hole
- 420:: Second stripper 421: Second through-hole
- 430:: Second guide member 431: Second guide recess
- 440:: Guide extension member
- 500:: First driving unit
- 510:: 1a driving unit 520: 1b driving unit
- 600:: Second driving unit
- 700:: Support plate
- 710:: First support plate
- 720:: Second support plate 721: Third through-hole
- 800:: Connection member

## Claims

1. A battery case shaping apparatus comprising:
a punch configured to shape a battery case;
a die plate unit having a shaping hole configured to allow a part of the punch to be inserted thereinto; and
an angle adjustment unit configured to adjust an inclination angle of the die plate unit.

2. The battery case shaping apparatus according to claim 1, wherein
the angle adjustment unit comprises a plurality of cylinder units, and
the plurality of cylinder units is individually driven.

3. The battery case shaping apparatus according to claim 2, wherein the cylinder unit has a spherical upper surface.

4. The battery case shaping apparatus according to claim 2, wherein
the angle adjustment unit further comprises a support member configured to support the plurality of cylinder units, and
the support member is provided with a plurality of receiving holes formed such that the plurality of cylinder units protrudes upward therethrough.

5. The battery case shaping apparatus according to claim 2, wherein the die plate unit comprises:
a first die plate having the shaping hole formed therein;
a second die plate located under the first die plate, the second die plate being configured to support the first die plate; and
a die holder located under the second die plate, the die holder being configured to fix the first die plate and the second die plate.

6. The battery case shaping apparatus according to claim 5, wherein
the angle adjustment unit is located under the die plate unit, and
the plurality of cylinder units is in contact with a lower surface of the die holder and adjusts an angle of the die holder through individual driving.

7. The battery case shaping apparatus according to claim 2, wherein the punch comprises:
a punch plate; and
a punch member protruding downward from the punch plate, the punch member being configured to be inserted into the shaping hole.

8. The battery case shaping apparatus according to claim 7, further comprising a stripper configured to press an outer periphery of the laminate sheet disposed on the die plate unit.

9. The battery case shaping apparatus according to claim 8, wherein the stripper comprises:
a first stripper configured to press the outer periphery of the laminate sheet, the first stripper having a first through-hole configured to allow the punch member to pass therethrough; and
a second stripper located above the first stripper, the second stripper being provided with a second through-hole having a position and a size corresponding to the first through-hole.

10. The battery case shaping apparatus according to claim 9, wherein the shaping hole, the first through-hole, and the second through-hole have mutually corresponding positions and sizes.

11. The battery case shaping apparatus according to claim 9, further comprising a first driving unit connected to an upper side of the punch so as to provide an upward and downward driving force to the punch or connected to an upper side of the stripper so as to provide an upward and downward driving force to the stripper.

12. The battery case shaping apparatus according to claim 2, further comprising a second driving unit located under the angle adjustment unit, the second driving unit being configured to provide an upward and downward driving force to the die plate unit.

13. The battery case shaping apparatus according to claim 2, further comprising:
a support plate comprising a first support plate configured to support the punch and a second support plate configured to support the angle adjustment unit; and
a connection member configured to connect the first support plate and the second support plate to each other.

14. The battery case shaping apparatus according to claim 13, wherein the second support plate is provided with a third through-hole configured to allow the angle adjustment unit to pass therethrough.

15. A battery case shaping method using the battery case shaping apparatus according to any one of claims 1 to 14, the battery case shaping method comprising:
(S1) locating a laminate sheet between the punch and the die plate unit; and
(S2) driving the punch or the die plate unit to shape the laminate sheet, wherein
prior to step (S2), the inclination angle of the die plate unit is adjusted by the angle adjustment unit.
